# EUROPEAN PATENT SPECIFICATION

(11) **EP 2 798 245 B1**
(45) Date of publication and mention of the grant of the patent: **29.11.2017**
(21) Application number: 12805989.6
(22) Date of filing: 05.12.2012
(51) Int. Cl.: F16J 9/16, F16J 9/24, F16J 9/14

(54) **SEAL UNIT OF A PISTON OF AN INTERNAL COMBUSTION ENGINE**
ABDICHTUNGSEINHEIT EINES KOLBENS EINES VERBRENNUNGSMOTORS
UNITÉ D'ÉTANCHÉITÉ DE PISTON DE MOTEUR À COMBUSTION INTERNE

(30) Priority: 30.12.2011 EP 11196151
(43) Date of publication of application: 05.11.2014
(73) Proprietor: FPT Industrial S.p.A., 10156 Torino (IT)
(72) Inventor: DELLORA, Giancarlo, I-10134 Torino (IT)
(74) Representative: Franzolin, Luigi
(86) International application number: PCT/EP2012/074470
(87) International publication number: WO 2013/098051

(56) References cited:
- EP-A2- 0 343 300
- DE-A1- 4 341 386
- GB-A- 191 416 310
- US-A- 4 280 708
- US-A1- 2007 252 338

## Description

### FIELD OF THE INVENTION

The present invention belongs to the field of the production of internal combustion engines. More precisely, the invention relates to a seal unit of a piston of an internal combustion engine suitable to provide a seal between the combustion chamber and the cylinder block and comprising two piston rings. Also GB191416310A discloses a sealing unit, whose features are in the preamble of claim 1.

The present invention relates also to an internal combustion engine comprising a seal unit according to the invention and also to a commercial or industrial vehicle comprising said internal combustion engine.

### DESCRIPTION OF THE PRIOR ART

As it is known, in otto or diesel cycle internal combustion engines, the pressure that develops in the combustion chambers acts directly on the head of the respective pistons, provoking their stroke within the corresponding cylinder. Piston stroke results in a rotation of the crankshaft to which the pistons themselves are connected. Thus the action of the pressure on the pistons results in available torque for the driving shaft.

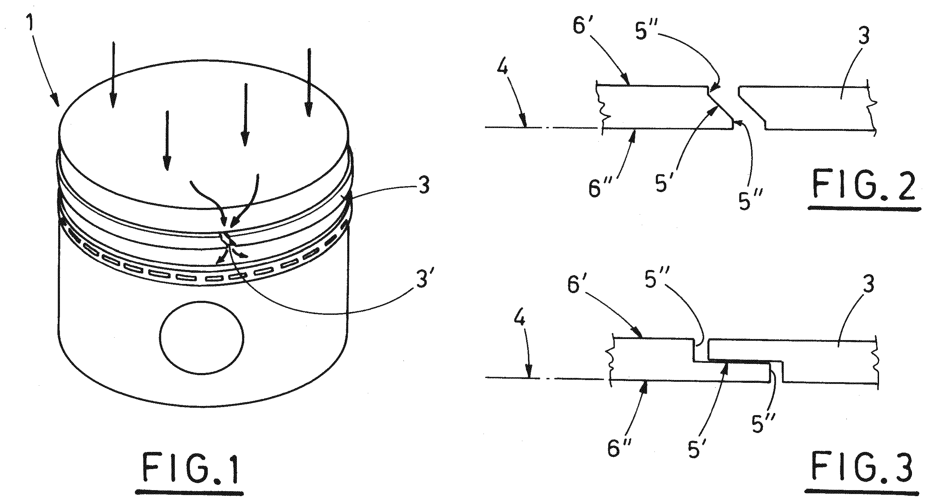

It is also known that, in order to isolate each combustion chamber from the cylinder block, seal rings are usually used, placed in corresponding perimetral grooves defined on the body of the piston. In this regard, figure 1 is a perspective view of a piston 1 comprising a groove within which a seal ring 3 is usually placed. The seal rings usually used are subject to high temperatures and to complex forces both in terms of their intensity and of their direction. For this reason they are interrupted, along their circumference, in correspondence of an interruption section 3' or "gap section" 3'.

The number of seal rings, namely the number of ring-shaped grooves defined in a piston, varies according to the type of engine. In the case of otto cycle engines, for example, at least a first groove and a second groove are defined on the piston, the second groove being in a position below the first one. Thus two seal rings will be provided.

In case of "fast" diesel cycle engines, namely having a speed of rotation of 3000 rpm or above, two grooves are normally provided below the first groove on the pistons. Consequently at least three seal rings will be provided. While in case of "slow" diesel cycle engines, namely having a speed of rotation below 1500 rpm, the number of grooves, in addition to the first one, may be higher or equal to three. Thus in these cases a higher number of rings is provided.

In any case, however, the main function of the seal ring inserted in the first ring-shaped groove (namely the one nearer to the head surface of the piston) of the piston is typically of gas sealing, while the rings in the other grooves (second, third, etc.) may also be of the scraper type or, anyway, may also have further purposes.

Figure 2 and 3 show two different embodiments of seal rings typically inserted in the first ring-shaped groove. In particular, the seal rings shown in such figures show an interruption section (gap) substantially Z-shaped, namely comprising a central portion 5' with a larger extension, and two end portions 5" with a smaller extension developing from opposite sides of the central portion 5'.

More precisely, in the solution of Figure 2, the portion 5' of the gap section develops mainly according to an inclined plane with respect to the horizontal plane 4 where the ring lies, while the two end portions 5" develop according to planes orthogonal to the same horizontal plane 4. While in the solution of Figure 3, the portion 5 of the gap section develops parallel to the horizontal plane 4 where the ring lies, while the two end portions 5 always develop according to planes orthogonal to the same horizontal plane 4.

The two solutions described above (figure 2 and 3), due to the orientation of the different portions defining the gap section, obstruct the passage of gas between the two flat surfaces of the ring (lower surface 6' and upper surface 6" indicated in figures 2 and 3). The slot section is substantially defined according to a "labyrinth" shape, namely it develops according to different planes, incident between each other, in order to obstruct the gas flow towards the cylinder block.

The solutions shown in figures 2 and 3, as well as other similar solutions known in the field, are relatively effective in the field of heat engines used on ships or anyway in those cases where considerable diameters of cylinder/piston are required. These solutions, however, are extremely disadvantageous in case of low power engines, namely in case of diameters (bores) usually below 250 mm. In these applications, due to the reduced dimensions of the seal rings (consequent on the reduced diameter of the pistons) it is extremely difficult to define a gap section having a "labyrinth" structure according to what was described above. This implies, on the one end, an increase of the costs, and, on the other end, a low reliability. In particular it has been observed that in case of engines with reduced bore, the traditional rings have limits both in terms of performance and of fuel consumption. In this sense it has to be noted that an inefficient seal of the gases generated in the combustion chamber results in a decrease of the power available to the driving shaft.

From these considerations, the need for a alternative technical solutions, allowing to overcome the aforementioned limits and the drawbacks connected to the traditional seal rings, emerges. Thus the main task of the present invention is to provide a seal unit for a piston of an internal combustion engine which allows to solve all the drawbacks mentioned above.

In the scope of this task, a first aim of the present invention is to provide a seal unit that is efficient for every type of engine (namely irrespective of their bore). A further aim of the present invention is to provide a seal unit that allows to obtain a higher seal with respect to the traditional solution, namely that allows to reduce/cancel the gas flow from the combustion chamber to the environment of the cylinder block.

Not least, the purpose of the present invention is to provide a seal unit which is reliable and easy to manufacture at competitive costs.

### SUMMARY THE INVENTION

The present invention thus relates to a seal unit according to what is stated in claim 1. In particular, the seal unit has an extremely simple structure, obtained by coupling two ring-shaped bodies, each one of them comprising a gap section defined by a plane having a substantially radial section. The overlapping of the two ring-shaped bodies and the offset position (not aligned) of the gap sections of the ring-shaped bodies themselves define as a whole a "labyrinth structure" which allows to obtain an improved seal of the combustion chamber. Unlike the prior art, such labyrinth structure is obtained without complex and precise cutting operations on the ring-shaped bodies, with remarkable advantages in terms of costs and reliability.

The object of the present invention is also a piston according to what is stated in Claim 8. In particular the piston is characterized in that it comprises the seal unit according to the invention which is placed in the first groove of the piston so that the ring-shaped bodies are free to rotate within the groove. This solution allows advantageously to make uniform the wear of the ring-shaped bodies and/or of the first groove that houses the latter. At the same time this solution makes more uniform also the formation of carbon deposits in correspondence of the first groove during the normal operation of the engine.

### LIST THE FIGURES

Further characteristics and advantages will become more evident from the following detailed description of a seal unit according to the present invention, that is shown in a merely illustrative and not limitative form in the attached drawings wherein:
- Figure 1 shows a perspective view of a piston of an internal combustion engine comprising a seal ring of the type known in the art;
- Figures 2 and 3 show schematic views of seal rings of the type known in the art;
- Figure 4 shows an exploded view of a seal unit according to the present invention;

- Figure 5 shows the portion of piston head comprising a seal unit according to the present invention;
- Figure 6 shows a section view of a first embodiment of a seal unit according to the present invention;
- Figures 7, 7A and 7B show section views of further embodiments of a seal unit according to the present invention;
- Figures 8 and 9 show a first possible blocking mode of a seal unit according to the present invention in a first ring-shaped groove of a piston of an internal combustion engine. In the figures the same reference numbers and letters identify the same elements or components.

### DETAILED DESCRIPTION THE INVENTION

The present invention thus relates to a seal unit 10 suitable to be mounted on a piston of an internal combustion engine. In particular, the seal unit 10 is intended to be operatively placed within a first ring-shaped groove 20' defined on the body 20 of the piston. In particular, the expression "first groove" indicates the ring-shaped groove 20' of a piston that is nearer to the head 25 of the body 20 of the piston itself, as shown in Figure 10.

The seal unit 10 according to the present invention comprises a first ring-shaped body 10' and a second ring-shaped body 10''. The first body 10' defines a first gap section 12' which substantially interrupts the continuity of the ring shape. The first gap section 12' is thus defined between two ends 10a of the first ring-shaped body 10'. According to the invention each one of such ends 10a develop of a radial plane, namely on a plane containing a reference axis 101 around which the first ring-shaped body 10' develops.

In the same way, the second body 10" defines a second gap section 12" which substantially interrupts the continuity of the ring shape. Also the second gap section 12" is thus defined between two reciprocally facing ends 10b of the second ring-shaped body 10". Also in this case the ends 10b of the second body 10" are radially plane, namely they develop on radial planes containing the reference axis 101 around which the second ring-shaped body 10" develops.

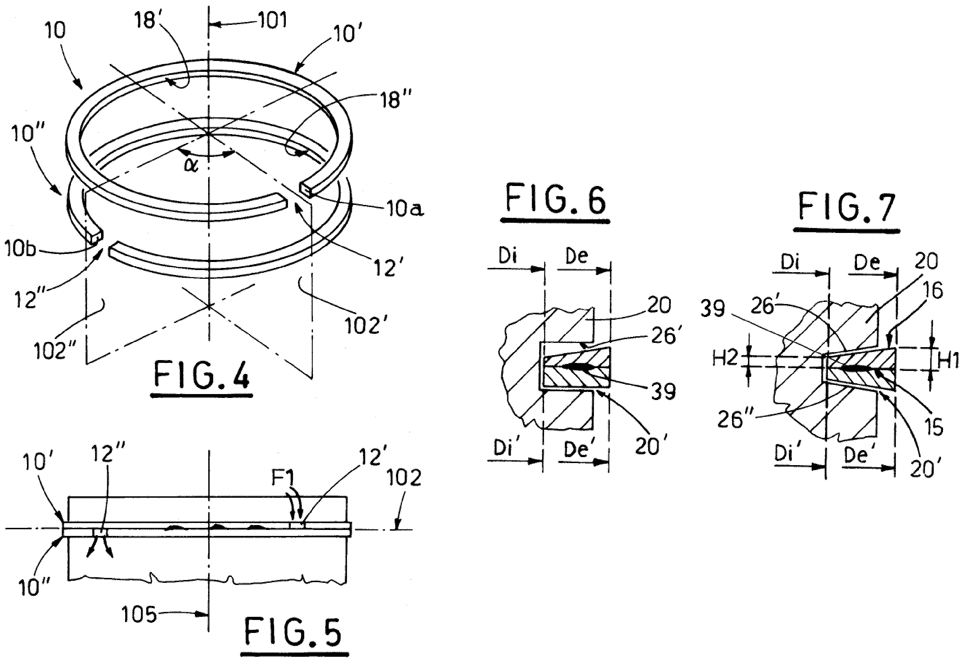

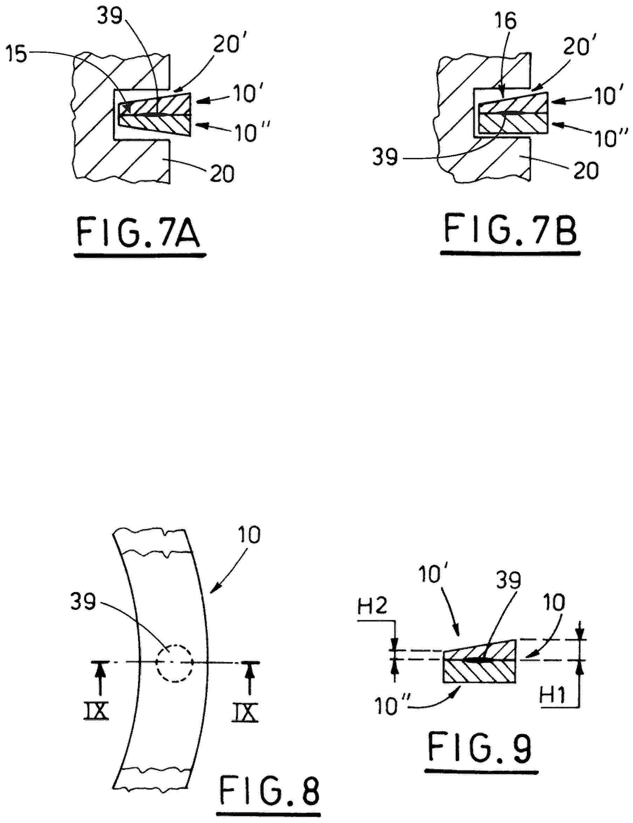

With reference to figures 6 and 7, according to the present invention, the two ring-shaped bodies 10',10" have the same diametral dimensions. This means that the internal diameter Di and the external diameter De of the first ring-shaped body 10' coincide with the internal diameter Di' and the external diameter De' of the second ring-shaped body 10".

According to the present invention, the first body 10' is coupled with the second body 10" so that the two bodies are coaxial with a reference axis 101 shown in Figure 4. The two bodies 10', 10" are in contact on a contact plane 102 (shown in figure 5) substantially orthogonal to said reference axis 101. In particular, according to the invention, the two bodies 10',10" are arranged so that the position of the first gap section 12' of the first body 10' is different from the position of the second gap section 12" of the second body 10". The positions of the sections 12',12" are evaluated with respect to the reference axis 101 defined above.

In other words, the two ring-shaped bodies 10', 10" are arranged so that the two gap sections 12', 12" are not aligned, namely they are not placed on the same plane. By this particular arrangement, the gas flow passing through the first gap section 12' of the first body 10' is advantageously blocked by the second body 10". The overlapping of the two bodies 10', 10" and the offset position of the two sections 12',12" define, as a whole, a "labyrinth structure" which allows to obtain a perfect seal of the combustion chamber. Unlike the prior art, such "labyrinth structure" is obtained without complex and precise cutting operations on the ring-shaped bodies.

On the contrary, the first section 12' is defined according to a first plane 102' having a substantially radial section, namely containing the reference axis 101 around which the first ring-shaped body 10' develops. In the same way, also the second gap section 12" is defined according to a second plane 102" having a substantially radial section, different from the first plane 201' and containing as well the reference axis 101. It is evident that, in order to obtain such gap sections 12,12, a simple and inexpensive cutting operation is sufficient.

According to the present invention, both bodies 10', 10" have a radial section comprising at least a flat side 15 developing on a plane substantially orthogonal to said reference axis 101. The two ring-shaped bodies 10', 10" are overlapping and are coupled in correspondence of the corresponding flat side as shown in the Figures 6, 7, 9, 7A, 7B. Such flat side substantially defines the contact plane 102 indicated above, in correspondence of which the two bodies 10', 10" are coupled.

Always according to the invention at least one of the bodies 10', 10" intended to occupy an upper position in said first groove has a radial tapered shape defined partially by said flat side 15 and partially by at least an inclined side 16, opposite to the flat one 15, which develops from a higher height H1 to a lower height H2 as shown in the Figures 7 and 9. For the purposes of the present invention, the expression "radial section" of said bodies 10', 10" refers to a section evaluated with respect to a section plane containing said reference axis 101.

The use of a ring-shaped body (in the upper portion of the groove 20') having a tapered radial section allows advantageously to confine the formation of carbon deposits only in the groove itself. The shape of the ring-shaped bodies 10', 10" (in terms of shape of the radial section), together with, in a synergic way, their mutual position (in terms of mutual position of the gap sections 12', 12" of the bodies themselves) makes it possible for the seal unit 10 to ensure an effective gas seal of the combustion chamber and, at the same time, to manage of the carbon deposit formation effectively, above all in the field of diesel engines.

According to another particularly relevant aspect of the present invention, the two ring-shaped bodies 10', 10" are coupled in the proximity of their flat side 15 and are reciprocally blocked by means of a mechanical fixing operation, such as for example spot welding or pinching. The mechanical fixing operation has substantially the purpose to define some connection areas 39 in correspondence of the contact surface (flat side 15) of the two ring-shaped bodies 10', 10''. Such connection areas 39 prevent the relative movement of the two bodies 10', 10", namely they keep the latter reciprocally blocked so that the first gap section (12') of the first body 10' maintains a fixed position with respect to the second section (12") and vice versa. Thus the "labyrinth structure" defined by the coupling of the two ring-shaped bodies 10', 10" is advantageously ensured. For example, in case of welding, the connection areas 39 are defined by areas of fusion material deriving from the welding. Such regions may be point-like, as in the case of the spot welding, but may also be continuous, developing on the whole coupling side or by zones.

With reference again to figure 4, the first gap section 12' develops on a first radial plane 102' containing the reference axis 101, whereas the second gap section 12" develops on second radial plane 102". The two bodies 10', 10" are preferably coupled and reciprocally blocked so that the angle α between the first 102' and the second 102" radial section plane is comprised in a range between 30° and 180°. The angle α mentioned above is representative of the different position of the gap sections 12',12" of the ring-shaped bodies 10',10".

With reference to figure 5, the gases (indicated by the arrows F1) generated in the combustion chamber pass through the first gap section 12' of the first body 10', but their passage is obstructed by the presence of the second body 10''. In order to reach the second gap section 12", the gases are thus forced to penetrate between the two bodies 10',10" in contact with each other, thus losing their intensity. This aspect results in an advantageous containment of the pressure in the cylinder block and, at the same time, in an increase of the engine performance, since the energy of the gas is not dissipated, but, on the contrary, it is transformed in useful power for the driving shaft. This also implies an advantageous reduction of the fuel consumption, that can be estimated in a range between 1 and 1.5 percentage point.

Figures 6 and 9 refer to a first possible embodiment wherein the first body 10' has a substantially trapezoidal-shaped radial section, whereas the second body 10" has a substantially rectangular-shaped radial section. In this way, and thanks to the tapered shape of the first body 10' (upper body in the groove 20'), the radial section of the seal unit 10 as a whole has a "right-angle trapezoid"-shape, wherein the inclined side 16 of the first body 10' is intended to face the upper side 26' of the first groove 20' of the piston 20. As already mentioned, such solution allows at the same time an optimal gas seal of the combustion chamber and a confinement of the carbon deposit formation within the first groove itself 20'.

If the seal unit has the aforementioned shape (first body 10' having a tapered radial section and second body having a rectangular radial section), the first groove 20' of the piston will have a substantially C-shaped radial section, in order to comply with the micromovements of the ring shaped bodies 10', 10" within the groove itself. Such micromovements generate a self cleaning effect, thus allowing a better management of the carbon deposit formation deriving from the combustion.

With reference to figure 7, according to an alternative embodiment, both the first body 10' and the second body 10" have a tapered/trapezoidal shaped radial section defined by a flat side 15 and by an inclined side 16, opposite to the flat one, which develops from a higher height H1, corresponding to the external diameter (De, De') of the two bodies 10',10", up to a lower height H2, corresponding, on the contrary, to the internal diameter Di, Di'. In this case, the two bodies 10', 10" are coupled, overlapping and reciprocally blocked in correspondence of their flat side 15 in order to define a substantially trapezoidal-shaped radial section for the seal unit 10, such radial section has substantially the shape of an isosceles trapezium, with two inclined sides 16, each one of them intended to face a side (upper 26' or lower 26") of the first groove 20'. This second embodiment is particularly suitable for diesel engines which operate with a MEP (Mean Effective Pressure) higher than 15-16 or which use heavy fuel. In these conditions, indeed, it is necessary to generate a self-cleaning effect between the rings and the groove, which is obtained by micro movements of the rings within the groove. In this sense, it has been observed that the tapered shape of the radial section of both the ring-shaped bodies 10', 10" and, overall, the "isosceles trapezium"-shape of the radial section of the seal unit 10 is very effective for the management of the carbon deposit formation.

With reference to the figures 7 and 7A in presence of ring-shaped bodies 10', 10" having a tapered/trapezoidal section, the first groove 20' of the piston 20 may have an isosceles trapezium-shaped radial section (shown in figure 7), namely geometrically coupled with the shape of the radial section of the seal unit 10 generated by the coupling of the two bodies 10', 10''. As an alternative, the first groove 20' of the piston may have a substantially C-shaped radial section (shown in figure 7A).

The two ring-shaped bodies 10',10" of the seal unit 10 may be made of a material usually used for making the seal rings of the traditional type. Furthermore they may be superficially coated, or treated, in order to increase the wear resistance according to methods per se known.

The present invention relates also to a piston for an internal combustion engine comprising a cylindrical body 20 which develops around a longitudinal axis 105 (shown in figure 5) upperly delimited by a head surface 25. Such body 20 comprises at least a first ring-shaped groove 20' defined in a position near such head surface 25. The piston 20 is characterized in that it contains a seal unit 10 according to the present invention operatively arranged within the first groove 20'. In this regard, when the seal unit 10 is inserted in the first groove 20', the longitudinal axis 105 of the piston 20 is aligned with the reference axis 101 of the seal unit 10 as shown in figures 4 and 5.

According to the present invention, the seal unit 10 is inserted in the first groove 20 of the piston 20 in a rotatable way, namely so that the ring-shaped bodies 10', 10" are free to rotate with respect to the longitudinal axis 105 of the piston body 20. In other words, the seal unit is free to rotate with respect to the first groove 20' up to a certain extent, which advantageously allow to make wear and carbon deposit formation uniform. Such effect advantageously results in an increase of the reliability and the life of the seal unit. At the same time, both the two bodies 10', 10" contribute to the seal of the gas generated in the combustion chamber and to the scraping of the residual oil on the walls of the cylinder where the piston 20 slides. It can be observed that, while the seal unit 10 is free to move/rotate with respect to the first groove 10' where it is housed, the two bodies 10', 10" do not change their reciprocal position due to the mechanical fixing that constrain them one another. Thus the angular mutual position of the gap sections 12', 12" of the bodies 10', 10" stays unchanged in order to ensure the labyrinth structure described above.

With reference again to figures 6 and 7, as indicated above, the radial section of the first groove 20' of the piston may have a different radial section depending on the geometry of the radial section of the bodies 10', 10" of the seal unit 10. The expression "radial section" of the first groove 20' indicates a section evaluated with respect to a section plane which contains the longitudinal axis 105 of the piston (figure 5). The first groove 20', for example, may thus have a substantially C-shaped radial section (as shown in figure 6) or, as an alternative, a substantially trapezoidal-shaped radial section (as shown in figure 7).

With reference to figures 8 and 9, according to a possible embodiment, the mechanical fixing operation of the ring-shaped bodies 10', 10" of the seal unit 10 (figures 8 and 9) is made after inserting the seal unit in the first groove 20'.

The present invention relates finally to an internal combustion engine comprising a plurality of cylinders, in each one of them a piston is slidably inserted. Such engine is characterized in that in at least one of said cylinders a piston according to the present invention is inserted.

The seal unit according to the invention allows to fulfil the purposes set forth above. In particular, compared to the known solutions, the seal unit according to the invention allows to obtain an improved isolation of the combustion chamber, which results in a lower pollution and in a lower deterioration of the oil. The effective isolation of the combustion chamber obtained by means of the seal unit described above allows also a reduction of the pressure in the cylinder block, and in an increase of the performance and in a decrease of the fuel consumption of the engine itself. At the same time, the seal unit according to the invention allows to advantageously reduce the gas flow rate leaking through the ring-shaped bodies. Such gas, as it is known, need to be filtered in order to separate the oil they contain, before being recirculated towards the intake line. Reducing such gas flow rate results in an advantageous reduction of the complexity and of the costs connected to gas filtering.

The seal unit according to the invention can be subjected to numerous variations or modifications, without departing from the scope of the invention; moreover all the details may be replaced by others that are technically equivalent.

In practice, the materials used and also the dimensions and the shapes may be any, according to the needs and to the state of the art.

## Claims

1. Seal unit (10) for a piston of an internal combustion engine suitable to be inserted in a first ring-shaped groove (20') of said piston, including:
- a first ring-shaped body (10') which defines a first gap section (12');
- a second ring-shaped body (10") which defines a second gap section (12"), said second body (10") having diametral dimensions substantially equivalent to the ones of said first body (10'),
said bodies (10',10") being coupled so that they are substantially coaxial to a reference axis (101) and are in contact on a plane (102) substantially orthogonal to said reference axis (101), said bodies (10',10") being reciprocally arranged so that the position of said first gap section (12') is different from the position of said second gap section (12"), said positions of said gap sections (12',12") being evaluated with respect to said reference axis (101), said bodies (10',10") having a radial section defined by at least a flat side (15) substantially orthogonal to said reference axis (101), said bodies (10', 10") being coupled in correspondence of said at least a flat side (15),
**characterized in that**
at least one of said ring-shaped bodies (10',10") having a tapered-shaped radial section defined by an inclined side (**16**) opposite to said flat side (**15**) which develops from a higher height (H1), corresponding to the external diameter (De, De') of the body, to a lower height (H2), corresponding to the internal diameter (Di, Di') of the body, said radial section being evaluated with respect to a plane containing said reference axis (101).

2. Seal unit (10) according to claim 1, wherein the first body (10') and said second body (10") are reciprocally blocked by a mechanical fixing operation, so that said first section (12') keeps a fixed position with respect to said second section (12") and vice versa.

3. Seal unit (10) according to Claim 2, wherein said first body (10') and said second body (10") are blocked by spot welding or pinching.

4. Seal unit (10) according to any Claim from 1 to 3, wherein both said first body (10') and said second body (10") have a tapered-shaped radial section defined by a flat side (15) and by an inclined side (16), opposite to said flat side (15), which develops from a higher height (H1) to a lower height (H2), said bodies (10', 10") being coupled and overlapping in correspondence of their flat side (15) so that said seal unit (10) as a whole has a substantially trapezoidal radial section.

5. Seal unit (10) according to any Claim from 1 to 3, wherein said first body (10') has a tapered-shaped radial section defined by a flat side (15) and by an inclined side (16), opposite to said flat side (15), which develops from a higher height (H1) to a lower height (H2) and wherein said second body (10") has a substantially rectangular radial section, coupled and overlapping in correspondence of their flat side (15) so that said seal unit (10) as a whole has a substantially right-angle trapezoid-shaped radial section.

6. Seal unit (10) according to any of the claims from 1 to 5, wherein said first gap section (12') develops on a first radial plane (102') containing said reference axis (101) and wherein said second gap section (12") develops in second radial plane (102"), wherein said ring-shaped bodies (10', 10") are arranged and are reciprocally blocked so that the angle (α) between said first radial plane (102') and said second radial plane (102") is comprised in an interval between 30° and 180°.

7. Seal unit (10) according to any of the claims from 1 to 6, wherein said bodies (10',10") have a superficial coating suitable to improve their wear resistance.

8. Piston for a combustion engine, said piston comprising a cylindrical body (20) which develops around a longitudinal axis (105), said cylindrical body (20) being upperly delimited by a head surface (25) and comprising a first groove (20') in a position near said head surface (25), **characterized in that** it comprises a seal unit (10) according to any of the claims from 1 to 7 inserted in said first groove (20'), said seal unit being arranged in said first groove (20') so that said ring-shaped bodies (10', 10") are free to rotate with respect to said longitudinal axis (105).

9. Piston according to claim 8, wherein said first groove (20') has a substantially C-shaped radial section, evaluated with respect to a plane containing said longitudinal axis (105).

10. Piston according to claim 8, wherein said first groove (20') has a substantially trapezoidal radial section, evaluated with respect to a plane containing said longitudinal axis (105).

11. Piston according to any of the claims from 8 to 10, wherein said bodies (10',10") of said seal unit (10) are reciprocally blocked by means of a mechanical fixing operation after inserting said seal unit (10) in said first groove (20').

12. Internal combustion engine comprising a plurality of cylinders in each one of them a piston is slidably inserted, said engine being **characterized in that** in at least one of said cylinders a piston according to any of the claims from 8 to 11 is inserted.

13. Industrial or commercial vehicle comprising an internal combustion engine according to claim 12.

## Patentansprüche

1. Dichtungseinheit (10) für einen Kolben einer Brennkraftmaschine, die in eine erste ringförmige Rille (20') des Kolbens eingesetzt werden kann und die Folgendes enthält:
- einen ersten ringförmigen Körper (10'), der einen ersten Spaltabschnitt (12') definiert;
- einen zweiten ringförmigen Körper (10"), der einen zweiten Spaltabschnitt (12") definiert, wobei der zweite Körper (10") diametrale Abmessungen, die im Wesentlichen denen des ersten Körpers (10') entsprechen, besitzt,
wobei die Körper (10', 10") so gekoppelt sind, dass sie zu einer Bezugsachse (101) im Wesentlichen koaxial sind und auf einer Ebene (102), die zu der Bezugsachse (101) im Wesentlichen senkrecht ist, in Kontakt sind, wobei die Körper (10', 10") gegenseitig so angeordnet sind, dass sich die Position des ersten Spaltabschnitts (12') von der Position des zweiten Spaltabschnitts (12") unterscheidet, wobei die Positionen der Spaltabschnitte (12', 12") in Bezug auf die Bezugsachse (101) evaluiert werden, wobei die Körper (10', 10") einen radialen Abschnitt, der durch mindestens eine flache Seite (15), die zu der Bezugsachse (101) im Wesentlichen senkrecht ist, definiert ist, besitzen, wobei die Körper (10', 10") entsprechend der mindestens einen flachen Seite (15) gekoppelt sind, **da**
**durch gekennzeichnet, dass**
mindestens einer der ringförmigen Körper (10', 10") einen verjüngt geformten radialen Abschnitt besitzt, der durch eine geneigte Seite (16) gegenüber der flachen Seite (15) definiert ist, die sich von einer höheren Höhe (H1), die dem Außendurchmesser (De, De') des Körpers entspricht, zu einer niedrigeren Höhe (H2), die dem Innendurchmesser (Di, Di') des Körpers entspricht, entwickelt,
wobei der radiale Abschnitt in Bezug auf eine Ebene, die die Bezugsachse (101) enthält, evaluiert wird.

2. Dichtungseinheit (10) nach Anspruch 1, wobei der erste Körper (10') und der zweite Körper (10") durch einen mechanischen Fixiervorgang so gegenseitig blockiert sind, dass der erste Abschnitt (12') in Bezug auf den zweiten Abschnitt (12") eine fixierte Position beibehält und umgekehrt.

3. Dichtungseinheit (10) nach Anspruch 2, wobei der erste Körper (10') und der zweite Körper (10") durch Punktschweißen oder Klemmen blockiert werden.

4. Dichtungseinheit (10) nach einem der Ansprüche 1 bis 3, wobei sowohl der erste Körper (10') als auch der zweite Körper (10") einen verjüngt geformten radialen Abschnitt besitzen, der durch eine flache Seite (15) und eine geneigte Seite (16), die gegenüber der flachen Seite (15) liegt und sich von einer höheren Höhe (H1) zu einer niedrigeren Höhe (H2) entwickelt, definiert ist, wobei die Körper (10', 10") gekoppelt sind und entsprechend ihrer flachen Seite (15) so überlappen, dass die Dichtungseinheit (10) als Ganzes einen im Wesentlichen trapezförmigen radialen Abschnitt besitzt.

5. Dichtungseinheit (10) nach einem der Ansprüche 1 bis 3, wobei der erste Körper (10') einen verjüngt geformten radialen Abschnitt besitzt, der durch eine flache Seite (15) und durch eine geneigte Seite (16), die gegenüber der flachen Seite (15) liegt und sich von einer höheren Höhe (H1) zu einer niedrigeren Höhe (H2) entwickelt, definiert ist und wobei der zweite Körper (10") einen im Wesentlichen rechteckigen radialen Abschnitt besitzt, der gekoppelt ist und entsprechend seiner flachen Seite (15) so überlappt, dass die Dichtungseinheit (10) als Ganzes einen im Wesentlichen rechtwinklig trapezförmigen radialen Abschnitt besitzt.

6. Dichtungseinheit (10) nach einem der Ansprüche 1 bis 5, wobei sich der erste Spaltabschnitt (12') auf einer ersten radialen Ebene (102'), die die Bezugsachse (101) enthält, entwickelt und wobei der zweite Spaltabschnitt (12") in einer zweiten radialen Ebene (102") entwickelt, wobei die ringförmigen Körper (10', 10") so angeordnet und gegenseitig blockiert sind, dass der Winkel (α) zwischen der ersten radialen Ebene (102') und der zweiten radialen Ebene (102") in einem Intervall zwischen 30° und 180° eingeschlossen ist.

7. Dichtungseinheit (10) nach einem der Ansprüche 1 bis 6, wobei die Körper (10', 10") eine Oberflächenbeschichtung, die ihre Verschleißfestigkeit verbessern kann, besitzen.

8. Kolben für eine Brennkraftmaschine, wobei der Kolben einen zylindrischen Körper (20), der sich um eine longitudinale Achse (105) entwickelt, umfasst, wobei der zylindrische Körper (20) durch eine Kopfoberfläche (25) nach oben begrenzt ist und eine erste Rille (20') in einer Position in der Nähe der Kopfoberfläche (25) umfasst, **dadurch gekennzeichnet, dass** er eine Dichtungseinheit (10) gemäß einem der Ansprüche 1 bis 7 umfasst, die in die erste Rille (20') eingesetzt ist, wobei die Dichtungseinheit in der ersten Rille (20') so angeordnet ist, dass sich die ringförmigen Körper (10', 10") in Bezug auf die longitudinale Achse (105) frei drehen können.

9. Kolben nach Anspruch 8, wobei die erste Rille (20') einen im Wesentlichen C-förmigen radialen Abschnitt, der in Bezug auf eine Ebene, die die longitudinale Achse (105) enthält, evaluiert wird, besitzt.

10. Kolben nach Anspruch 8, wobei die erste Rille (20') einen im Wesentlichen trapezförmigen radialen Abschnitt, der in Bezug auf eine Ebene, die die longitudinale Achse (105) enthält, evaluiert wird, besitzt.

11. Kolben nach einem der Ansprüche 8 bis 10, wobei die Körper (10', 10") der Dichtungseinheit (10) nach dem Einsetzen der Dichtungseinheit (10) in die erste Rille (20') durch einen mechanischen Fixiervorgang gegenseitig blockiert sind.

12. Brennkraftmaschine, die mehrere Zylinder umfasst, in denen jeweils ein Kolben gleitend eingesetzt ist, wobei die Kraftmaschine **dadurch gekennzeichnet ist, dass** in mindestens einen der Zylinder ein Kolben nach einem der Ansprüche 8 bis 11 eingesetzt ist.

13. Gewerbliches Fahrzeug oder Nutzfahrzeug, das eine Brennkraftmaschine nach Anspruch 12 umfasst.

## Revendications

1. Unité d'étanchéité (10) pour un piston d'un moteur à combustion interne, appropriée pour être insérée dans une première rainure de forme annulaire (20') dudit piston, comprenant :
un premier corps de forme annulaire (10') qui définit une première section d'espace (12') ;
un second corps de forme annulaire (10") qui définit une seconde section d'espace (12"), ledit second corps (10") ayant des dimensions diamétrales sensiblement équivalentes à celles dudit premier corps (10'), lesdits corps (10', 10") étant couplés de sorte qu'ils sont sensiblement coaxiaux à un axe de référence (101) et sont en contact sur un plan (102) sensiblement orthogonal audit axe de référence (101), lesdits corps (10', 10") étant agencés de manière réciproque de sorte que la position de ladite première section d'espace (12') est différente de la position de ladite seconde section d'espace (12"), lesdites positions desdites sections d'espace (12', 12") étant évaluées par rapport audit axe de référence (101), lesdits corps (10', 10") ayant une section radiale définie par au moins un côté plat (15) sensiblement orthogonal audit axe de référence (101), lesdits corps (10', 10") étant couplés en correspondance dudit au moins un côté plat (15),
**caractérisée en ce que** :
au moins l'un desdits corps de forme annulaire (10', 10") ayant une section radiale de forme progressivement rétrécie, définie par un côté incliné (16) opposé audit côté plat (15) qui se développe à partir d'une hauteur plus haute (H1) correspondant au diamètre externe (De, De') du corps, jusqu'à une hauteur plus basse (H2), correspondant au diamètre interne (Di, Di') du corps, ladite section radiale étant évaluée par rapport à un plan contenant ledit axe de référence (101).

2. Unité d'étanchéité (10) selon la revendication 1, dans laquelle le premier corps (10') et ledit second corps (10") sont réciproquement bloqués par une opération de fixation mécanique, de sorte que ladite première section (12') maintient une position fixe par rapport à ladite seconde section (12") et vice versa.

3. Unité d'étanchéité (10) selon la revendication 2, dans laquelle ledit premier corps (10') et ledit second corps (10") sont bloqués par soudage par points ou poinçonnement.

4. Unité d'étanchéité (10) selon l'une quelconque des revendications 1 à 3, dans laquelle à la fois ledit premier corps (10') et ledit second corps (10") ont une section radiale de forme progressivement rétrécie, définie par un côté plat (15) et par un côté incliné (16), opposé audit côté plat (15), qui se développe à partir d'une hauteur plus haute (H1) jusqu'à une hauteur plus basse (H2), lesdits corps (10', 10") étant couplés et se chevauchant en correspondance de leur côté plat (15), de sorte que ladite unité d'étanchéité (10), dans son ensemble, a une section radiale sensiblement trapézoïdale.

5. Unité d'étanchéité (10) selon l'une quelconque des revendications 1 à 3, dans laquelle ledit premier corps (10') a une section radiale de forme progressivement rétrécie, définie par un côté plat (15) et par un côté incliné (16), opposé audit côté plat (15), qui se développe à partir d'une hauteur plus haute (H1) jusqu'à une hauteur plus basse (H2) et dans laquelle ledit second corps (10") a une section radiale sensiblement rectangulaire, couplée et se chevauchant en correspondance de leur côté plat (15), de sorte que ladite unité d'étanchéité (10), dans son ensemble, a une section radiale de forme trapézoïdale sensiblement en angle droit.

6. Unité d'étanchéité (10) selon l'une quelconque des revendications 1 à 5, dans laquelle ladite première section d'espace (12') se développe sur un premier plan radial (102') contenant ledit axe de référence (101) et dans laquelle ladite seconde section d'espace (12") se développe dans un second plan radial (102"), dans laquelle lesdits corps de forme annulaire (10', 10") sont agencés et sont bloqués réciproquement de sorte que l'angle (α) entre ledit premier plan radial (102') et ledit second plan radial (102") est compris dans un intervalle situé entre 30° et 180°.

7. Unité d'étanchéité (10) selon l'une quelconque des revendications 1 à 6, dans laquelle lesdits corps (10', 10") ont un revêtement superficiel approprié pour améliorer leur résistance à l'usure.

8. Piston pour un moteur à combustion, ledit piston comprenant un corps cylindrique (20) qui se développe autour d'un axe longitudinal (105), ledit corps cylindrique (20) étant délimité vers le haut par une surface de tête (25) et comprenant une première rainure (20') dans une position à proximité de ladite surface de tête (25), **caractérisé en ce qu'**il comprend une unité d'étanchéité (10) selon l'une quelconque des revendications 1 à 7, insérée dans ladite première rainure (20'), ladite unité d'étanchéité étant agencée dans ladite première rainure (20') de sorte que lesdits corps de forme annulaire (10', 10") sont libres de tourner par rapport audit axe longitudinal (105).

9. Piston selon la revendication 8, dans lequel ladite première rainure (20') a une section radiale sensiblement en forme de C, évaluée par rapport à un plan contenant ledit axe longitudinal (105).

10. Piston selon la revendication 8, dans lequel ladite première rainure (20') a une section radiale sensiblement trapézoïdale, évaluée par rapport à un plan contenant ledit axe longitudinal (105).

11. Piston selon l'une quelconque des revendications 8 à 10, dans lequel lesdits corps (10', 10") de ladite unité d'étanchéité (10) sont réciproquement bloqués au moyen d'une opération de fixation mécanique après l'insertion de ladite unité d'étanchéité (10) dans ladite première rainure (20').

12. Moteur à combustion interne comprenant une pluralité de cylindres dans chacun desquels un piston est inséré de manière coulissante, ledit moteur étant **caractérisé en ce que** dans au moins l'un desdits cylindres, un piston selon l'une quelconque des revendications 8 à 11, est inséré.

13. Véhicule industriel ou commercial comprenant un moteur à combustion interne selon la revendication 12.
